# EUROPÄISCHE PATENTSCHRIFT

(11) **EP 2 384 424 B1**
(45) Veröffentlichungstag und Bekanntmachung des Hinweises auf die Patenterteilung: **06.05.2015**
(21) Anmeldenummer: 10701357.5
(22) Anmeldetag: 25.01.2010
(51) Int. Cl.: G01J 3/18, G01J 3/28, G01J 3/02

(54) **ECHELLE-SPEKTROMETERANORDNUNG MIT INTERNER VORDISPERSION**
ECHELLE SPECTROMETER ARRANGEMENT USING INTERNAL PREDISPERSION
ENSEMBLE SPECTROMÈTRE ÉCHELLE À PRÉDISPERSION INTERNE

(30) Priorität: 30.01.2009 DE 102009003413
(43) Veröffentlichungstag der Anmeldung: 09.11.2011
(73) Patentinhaber: Leibniz - Institut Für Analytische Wissenschaften, 44139 Dortmund (DE)
(72) Erfinder: BECKER-ROSS, Helmut, 12557 Berlin (DE); FLOREK, Stefan, 12526 Berlin (DE); OKRUSS, Michael, 14482 Potsdam (DE)
(74) Vertreter: Weisse, Renate
(86) Internationale Anmeldenummer: PCT/EP2010/050774
(87) Internationale Veröffentlichungsnummer: WO 2010/086283

(56) Entgegenhaltungen:
- EP-A2- 0 442 596
- WO-A1-01/61292
- WO-A1-95/31703
- WO-A1-03/067204
- WO-A1-03/075050
- WO-A2-02/39077
- DE-A1- 2 312 777

## Beschreibung

### Technisches Gebiet

Die Erfindung betrifft eine Echelle-Spektrometeranordnung mit interner Ordnungstrennung enthaltend
(a) ein Echelle-Gitter zur spektralen Zerlegung von Strahlung in einer Hauptdispersionsrichtung,
(b) ein Prisma zur Ordnungstrennung mittels spektraler Zerlegung der Strahlung in einer Querdispersionsrichtung, welche einen Winkel mit der Hauptdispersionsrichtung des Echelle-Gitters bildet, so dass ein zweidimensionales Spektrum mit einer Mehrzahl von getrennten Ordnungen erzeugbar ist,
(c) eine abbildende Optik zur Abbildung der durch einen Eintrittsspalt in die Spektrometer-Anordnung eintretenden Strahlung in eine Bildebene, und
(d) einen Flächendetektor mit einer zweidimensionalen Anordnung einer Vielzahl von Detektorelementen in der Bildebene, und
(e) Vordispersionsmittel zur Vordispersion der Strahlung in Richtung der Querdispersion des dispergierenden Elementes.

Bei einem Echelle-Spektrometer werden Gitter mit einem treppenartigen (Echelle (frz.) = Treppe) Querschnitt verwendet. Durch die stufenartige Struktur mit einem entsprechenden Blaze-Winkel wird ein Beugungsmuster erzeugt, welches die gebeugte Intensität in hohen Ordnungen, z.B. in fünfzigster bis einhundertster Ordnung konzentriert. Dadurch können hohe spektrale Auflösungen bei kompakter Anordnung erreicht werden. Die Ordnungen können sich - je nach einfallenden Wellenlängen - überlagern. Die Ordnungen werden bei Echelle-Spektrometern mit interner Ordnungstrennung daher nochmals quer zur Dispersionsrichtung des Echelle-Gitters dispergiert, um die verschiedenen auftretenden Ordnungen zu trennen. Man erhält so ein zweidimensionales Spektrum, das mit Flächendetektoren erfasst werden kann.

Ein Echelle-Spektrometer mit interner Ordnungtrennung unterscheidet sich von Echelle-Spektrometern mit externer Ordnungstrennung dadurch, daß bei den letztgenannten nur Strahlung aus einem kleinen Spektralbereich in das Spektrometer eintritt. Bei Spektrometern mit interner Ordnungstrennung wird das Spektrum in Form einer zweidimensionalen Struktur auf dem Detektor erzeugt. Diese Struktur besteht aus im wesentlichen parallel zueinander angeordneten, spektralen Abschnitten von der Größe eines freien Spektralbereichs. Die Verwendung eines Flächendetektors mit einer Vielzahl von Detektorelementen erlaubt die simultane Erfassung eines großen Wellenlängenbereichs mit hoher Auflösung.

Die Querdispersion wird gewöhnlich so groß gewählt, dass die Ordnungen überall vollständig getrennt sind. Um dies über den gesamten Spektralbereich zu gewährleisten, gibt es spektrale Bereiche, bei denen zwischen den einzelnen Ordnungen ein nicht genutzter Zwischenraum entsteht. So entstehen bei Verwendung eines Prismas zur Querdispersion im kurzwelligen Spektralbereich aufgrund der höheren Dispersion größere Zwischenräume als im längerwelligen Spektralbereich.

Nachteilig bei den bekannten Anordnungen ist es, daß die Detektoren im allgemeinen sehr groß sein müssen, wenn größere Spektralbereiche mit hoher Auflösung und ausreichendem Lichtleitwert erfasst werden sollen. Weiterhin ergeben sich Probleme, wenn die Strahlungsquelle mit sehr unterschiedlichen spektralen Intensitäten emittiert. So wird der in der Spektroskopie wichtige Spektralbereich von 193 nm bis 852 nm zwar von einigen Strahlern vollständig abgedeckt, die Intensität ist jedoch im Bereich oberhalb 350 nm oftmals um mehrere Größenordnungen höher als im kurzwelligen Spektralbereich bei 200 nm. Üblicherweise haben Detektoren keinen ausreichenden Dynamikbereich, so daß die Spektralbereiche nur mit Einbußen bei der Empfindlichkeit simultan erfasst werden können oder getrennt voneinander mit unterschiedlichen Belichtungszeiten gemessen werden müssen.

### Stand der Technik

Aus der DD 292078 ist eine Anordnung bekannt, bei welcher die Zwischenräume zwischen den Ordnungen genutzt werden. Das Spektrometer wird mit einer Anordnung zur Vordispersion der in das Spektrometer eintretenden Strahlung versehen. Diese Anordnung ist außerhalb der eigentlichen Spektrometeranordnung vorgesehen. Die Strahlung wird durch ein Prisma mit sehr kleinem Winkel vordispergiert. Weiterhin wird eine Eintrittsspalthöhe gewählt, die mit der maximalen Breite eines Zwischenraums zwischen zwei Ordnungen im kurzwelligen Spektralbereich korrespondiert. Durch geeignete Beleuchtung des Eintrittsspalts kann nun die kurzwellige Strahlung vollständig in das Spektrometer eintreten. Die Strahlung der längerwelligen Spektralbereiche tritt aufgrund der Vordispersion nur teilweise durch den Eintrittsspalt. Dadurch wird in den Bereichen, wo die Ordnungstrennung nicht so groß ist, eine geringere Eintrittsspalthöhe wirksam. Auf diese Weise wird für den im allgemeinen intensitätsschwachen kurzwelligen Spektralbereich das Signal-Rausch-Verhältnis verbessert, indem die Intensität mehrerer Detektorelemente des Detektors aufsummiert wird. Die auf jedes einzelne Detektorelement auftreffende Strahlung bleibt jedoch gleich. Die Beleuchtungsstärke jedes einzelnen Detektorelements wird durch die Anordnung praktisch nicht verändert. Durch die Anordnung wird die Detektorfläche zwar vollständig ausgenutzt, die zur Erfassung des kompletten Spektrums benötigte Detektorgröße bleibt aber gleich. Durch die Verwendung eines Prismas sowohl für die Vor- als auch für die Querdispersion bleiben die Unterschiede in der Ordnungstrennung entlang des Spektrums unverändert.

Es ist weiterhin eine Anordnung bekannt, die eine bessere Ausnutzung der Detektoroberfläche durch gleichmäßigere Querdispersion über den gesamten Spektralbereich zum Ziel hat. Diese gleichmäßigere Querdispersion wird dadurch erreicht, daß die Querdispersion durch zwei gegenläufige Prismen unterschiedlichen Materials bewirkt wird. Die Dispersion bestimmt sich dann aus der Differenz der Dispersionen der beiden Materialien. Es müssen große Prismenwinkel verwendet werden, um eine ausreichend große Differenz zu erreichen. Es treten entsprechend hohe Transmissionsverluste bei gleichzeitig nur geringer resultierender Dispersion auf.

DE 10 2004 028 001 A1 beschreibt eine Anordnung welche den Einsatz kommerziell verfügbarer, kleinerer Detektoren erlaubt. Die Anordnung verwendet ein weiteres Echelle-Spektrometer mit einer zusätzlichen abbildenden Optik. Jedes der beiden Spektrometer ist auf einen Wellenlängenbereich optimiert. Die Messung der Strahlung erfolgt dann durch Aufteilung der Wellenlängenbereiche und zeitlich getrennt. Der im allgemeinen intensitätsschwächere, kurzwellige Wellenlängenbereich wird in einer ersten Messung und der intensivere, langwellige Wellenlängenbereich in einer zweiten Messung mit dem anderen Spektrometer durchgeführt. Beide Spektrometer verwenden den gleichen Detektor, der bei dieser Anordnung kleiner ausgebildet sein darf, da nicht mehr das komplette Spektrum vom Detektor erfasst werden muss.

Gilbert M. Levy, Alexander Qaglia, Robert E. Lazure und Scott W. McGeorge in Spectrochimica Acta, Vol 42.B (1987) S. 341-351 beschreiben eine Spektrometeranordnung mit einem Echellespektrometer mit Vordispersion. Die Anordnung nutzt ein Gitter zur Vordispersion. In der Ebene des so erzeugten Spektrums ist eine Maske vorgesehen, mit welcher nicht-verwendete Spektralbereiche gezielt ausgeblendet werden. Die übrigen Spektralbereiche werden mit einem Echellespektrometer in der gleichen Richtung dispergiert und auf eine eindimensionale Zeile gelenkt.

DE 2 312 777 offenbart eine Anordnung mit einem Echelle-Spektrometer mit interner Ordnungstrennung. Das gesamte Spektrum wird auf einen Detektor abgebildet. Die zur Querdispersion vorgesehene Dispersionsanordnung umfasst ein Prisma und ein unmittelbar dahinter vorgesehenes Dispersionsgitter. Prismendispersion und Gitterdispersion sind so ausgelegt ist, dass die Ordnungen im wesentlichen äquidistant auf dem Detektor erscheinen.

### Offenbarung der Erfindung

Es ist Aufgabe der Erfindung, eine Echelle-Spektrometeranordnung der eingangs genannten Art zu schaffen, die eine Messung von Spektren mit großem Spektralbereich und stark variierenden Intensitäten mit kommerziell verfügbaren Detektoren erlaubt.

Erfindungsgemäß wird die Aufgabe dadurch gelöst, durch ein Gerät mit den Merkmalen von Anspruch 1.

Das zusätzliche, vordispergierte Spektrum erfordert keine hohe spektrale Auflösung. Es kann mit bekannten Dispersionsmitteln erzeugt werden. Als abbildende Optik können zwei Spiegel verwendet werden, welche nur geringe Reflexionsverluste über den gesamten Spektralbereich aufweisen. Das Spektrum kann mit einem Plangitter erzeugt werden. Ein zusätzlicher Spalt ist nicht erforderlich. Das zusätzliche Spektrum ist zumindest in Vordispersionsrichtung begrenzungsfrei ausgebildet. Anders als mit mechanischen Mitteln, etwa einer Maske oder einem Spalt kann das vordispergierte Spektrum mit optischen Mitteln gezielt beeinflusst werden. Die Vordispersion erfolgt vorzugsweise - absolut gesehen - in der gleichen Richtung, wie die Querdispersion.

Optische Mittel können Mittel zur ortsabhängigen Intensitätsschwächung der vordispergierten Strahlung in der zusätzlichen Bildebene sein. Diese können durch einen in der zusätzlichen Bildebene angeordneten Graufilter mit ortsabhängiger Transmission verwirklicht werden. Die Transmission kann sich entlang des Spektrums derart ändern, dass der Dynamikbereich der Detektorelemente optimal ausgenutzt wird. In Bereichen mit schwacher Intensität wird die Strahlung vollständig durchgelassen. In Bereichen hoher Intensität wird die Strahlung stark geschwächt. Anders als bei der Verwendung von Blenden erfolgt keine räumliche Begrenzung einzelner Strahlungs-Bündel. Es wird ferner der vollständige Wellenlängen-Bereich des Spektrums durchgelassen.

In einer besonders bevorzugten Ausgestaltung der Erfindung ist die Intensitätsschwächung an den spektralen Verlauf der Transmission und Reflexion der abbildenden Optik, des Echellegitters, der dispergierenden Elemente, die Spektralverteilung der Intensität eines Strahlers und/oder die Spektralverteilung der Quanteneffizienz des Detektors derart angepasst, dass das von einem Strahler in dem Detektor erzeugte Intensitätsspektrum im wesentlichen gleichförmig ist.

Das vordispergierende Element ist ein Gitter. Das dispergierende Element für die Querdispersion ist ein Prisma und die Gitterstrichzahl des vordispergierenden Gitters ist derart an die Dispersion des Prismas angepasst, dass die auf den Detektor abgebildeten Ordnungen im Wesentlichen äquidistant auftreten. Mit anderen Worten: das vordispergierte Spektrum wird durch Auswahl der Gitterstrichzahl und der Brennweite der vordispergierenden abbildenden Optik derart beeinflusst, dass sich der aus Querdispersion und Vordispersion ergebende Verlauf und der Verlauf der freien Spektralbereiche des Echelle-Gitters, welcher proportional zum Quadrat der Wellenlänge ist, im wesentlichen kompensieren. Die Auswahl solcher geeigneten optischen Mittel ermöglicht im wesentlichen äquidistante Ordnungsabstände und somit die optimale Nutzung der Detektorfläche.

Als optisches Mittel zur ortsabhängigen Intensitätsschwächung der vordispergierten Strahlung in der zusätzlichen Bildebene kann nach einer ersten Variante der Erfindung ferner ein Ordnungsfilter vorgesehen sein, welcher höhere Ordnungen des Vordispersionsgitters ausblendet.

Alternativ kann das vordispergierende Mittel ein zusätzliches Prisma enthalten, dessen Dachkante derart angeordnet ist, dass die Prismendispersion parallel zur Hauptdispersionsrichtung des Echelle-Gitters verläuft. Die höheren Beugungsordnungen des vordispergierenden Mittels werden dann vom Spektrum 1. Ordnung getrennt und können mit einer Blende ausgeblendet oder abgeschattet werden. Dann fällt nur Strahlung vorzugsweise der ersten oder einer anderen ausgewählten Ordnung des vordispergierenden Gitters auf den Detektor.

Es versteht sich, dass die optischen Mittel zur Beeinflussung des vordispergierten Spektrums auch kombiniert werden können. So kann die Vordispersion mit einem Gitter erfolgen, um einen kleinen Detektor zu ermöglichen und gleichzeitig ein Graufilter verwendet werden mit dem der Dynamikbereich des Detektors berücksichtigt wird. Wichtig ist, dass das zusätzliche Spektrum die Möglichkeit der gezielten Beeinflussung der Photonenzahl schafft, welche pro Zeiteinheit auf die einzelnen beleuchteten Detektorpixel treffen. Hierbei sind anders als etwa bei der Verwendung von lichtundurchlässigen Blenden Zwischenwerte möglich, die quasi stufenlos zugänglich sind.

Die beschriebene Spektrometeranordnung kann eine Strahlungsquelle mit kontinuierlichem Spektrum zwischen 190 nm und 860 nm, insbesondere eine Xe-Hochdruck-Kurzbogenlampe aufweisen. Sie eignet sich besonders für Atomabsorptionsspektroskopie (AAS)

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine schematische Darstellung einer Echelle-Spektrometeranordnung, bei welcher die Strahlung eines Strahlers vordispergiert wird.
- Fig.2: illustriert ein Spektrum auf einem Detektor.
- Fig.3: illustriert den spektralen Intensitätsverlauf eines typischen Kontinuumsstrahlers, der Empfindlichkeit eines typischen Detektors und der Reflektivität von typischen Spiegeln.
- Fig.4: zeigt die ortsaufgelöste Transmission eines Graufilters.

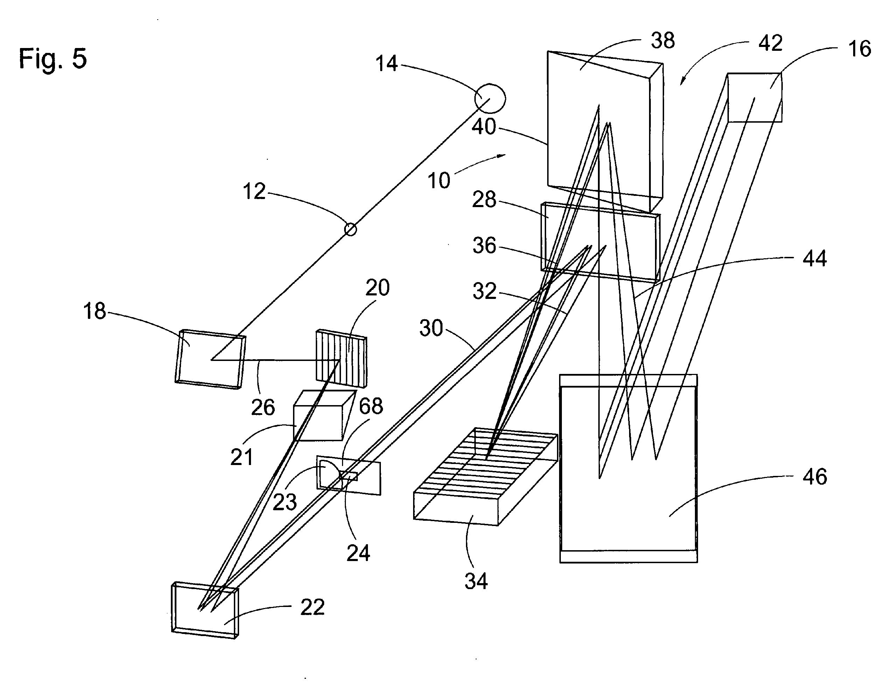

- Fig.5: zeigt ein alternatives Ausführungsbeispiel für ein Echelle-Spektrometer, bei welchem ein Prisma mit einer Blende statt eines Graufilters verwendet wird.
- Fig.6: ist eine schematische Darstellung des Bildes im ersten Fokus einer Anordnung aus Figur 5 mit Blende.

### Beschreibung des Ausführungsbeispiels

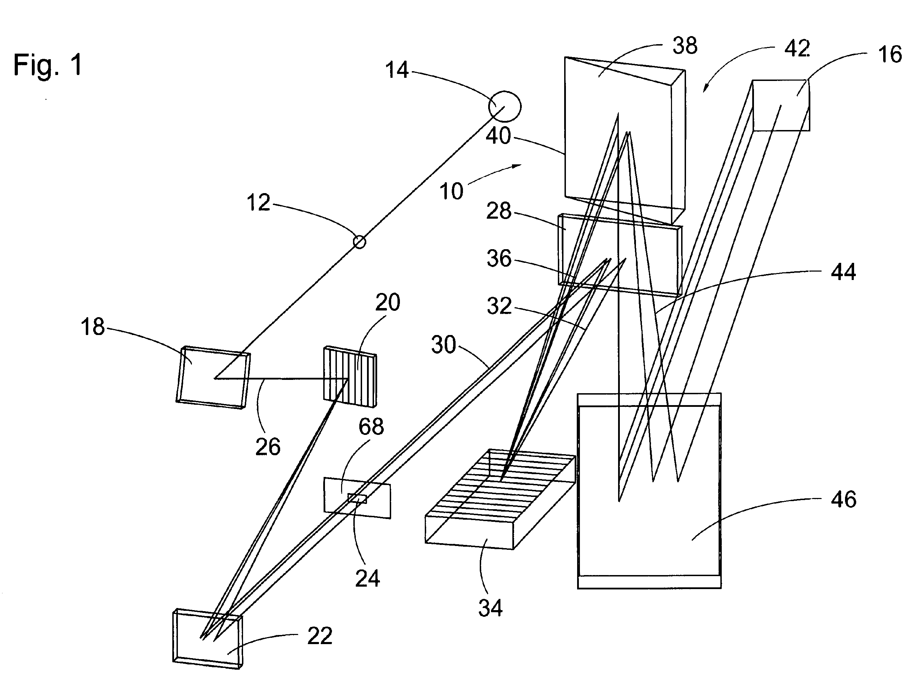

Figur 1 zeigt eine Echelle-Spektrometeranordnung die allgemein mit 10 bezeichnet ist. Die Echelle-Spektrometeranordnung 10 weist einen Eintrittsspalt 12 auf. Der Eintrittsspalt 12 wird mit Strahlung aus einer Strahlungsquelle 14 beleuchtet. Eine solche Strahlungsquelle ist beispielsweise eine Xenon-Kurzbogen-Hochdrucklampe oder ein Deuteriumstrahler, wie sie bei der Atomabsorptionsspektroskopie verwendet werden. Alternativ kann die Strahlung einer Emissionsquelle, beispielsweise eine induktivgekoppelte Plamaquelle (ICP) auf den Eintrittsspalt abgebildet werden.

Die Breite und Höhe des Eintrittsspalts 12 sind an die Breite und Höhe der Detektorelemente eines Detektors 16 angepasst. Eine vordispergierende, abbildende Optik aus einem Kollimatorspiegel 18 und einem Kameraspiegel 22 bilden den Eintrittsspalt 12 in eine Bildebene 24 ab. Zwischen Kollimatorspiegel 18 und Kameraspiegel 22 ist ein reflektierendes Plangitter 20 angeordnet. Das Plangitter 20 dient der Vordispersion der einfallenden, parallelen Strahlung 26 vom Kollimatorspiegel 18. Statt der beschriebenen vordispergierenden abbildenden Optik ist auch ein gekrümmtes, abbildendes Gitter geeignet.

In der Bildebene 24 entsteht ein lineares Spektrum mit einer räumlichen Ausdehnung von etwa 12 mm über den Spektralbereich von 190 bis 860 nm. Diese vordispergierte Strahlung trifft auf einen weiteren Kollimatorspiegel der abbildenden Optik, der in Figur 1 mit 28 bezeichnet ist. Dies ist durch Strahlen 30 repräsentiert.

Die am Kollimatorspiegel 28 reflektierte, parallelisierte Strahlung 32 trifft auf ein Echellegitter 34. Am Echellegitter 34 wird die Strahlung 32 in hoher Ordnung quer zur Dispersionsrichtung der Vordispersion des Gitters 20 dispergiert. Die dispergierte Strahlung 36 wird von dem Echellegitter 34 auf bekannte Weise in Richtung auf ein Quarzprisma 38 reflektiert. Die Dachkante 40 des Quarzprismas 38 ist so orientiert, dass die Querdispersion am Quarzprisma senkrecht zur Dispersionsrichtung des Echellegitters 34 und parallel zur Dispersionsrichtung des Plangitters 20 erfolgt, wobei sich die Dispersionen des Plangitters und des Quarzprismas addieren. Das Quarzprisma 38 ist auf seiner Rückseite 42 verspiegelt. Dadurch wird die einfallende Strahlung 36 nach zweifachem Durchgang durch das Prisma 38 auf einen Kameraspiegel der abbildenden Optik 46 reflektiert. Dies ist durch einen Strahl 44 repräsentiert. Der Kameraspiegel 46 bildet die Strahlung auf den Detektor 16 ab. Der Detektor 16 ist ein kommerziell verfügbarer Charge-Coupled-Device (CCD)-Detektor, welcher im Wellenlängenbereich von 190 bis 860 nm eine hohe Empfindlichkeit aufweist.

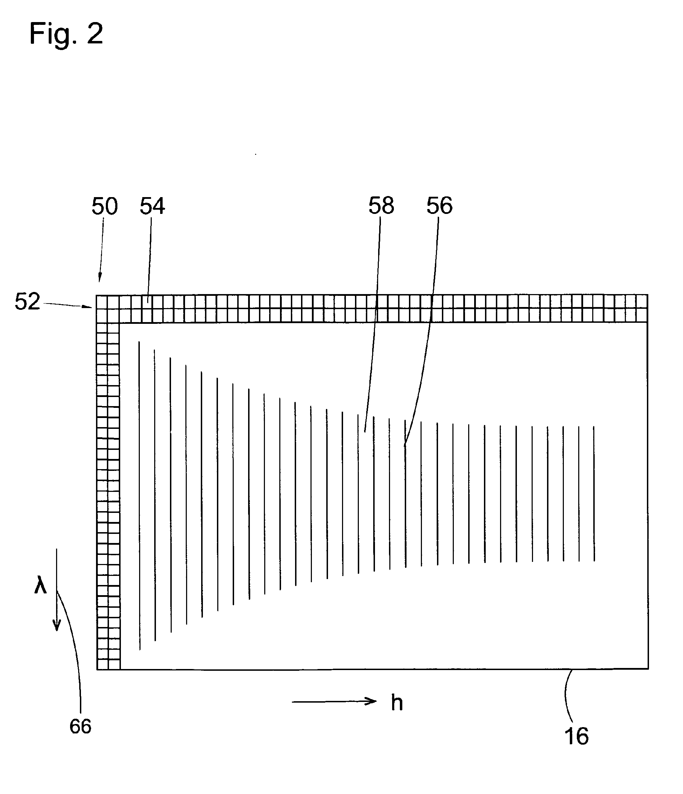

Der Detektor 16 umfasst eine Vielzahl von Spalten 50 und Zeilen 52 mit Detektorelementen 54 (Pixeln), mit denen die auftreffende Strahlung erfasst wird. Zwei der Spalten und Zeilen auf einem solchen Detektor 16 sind schematisch in Figur 2 dargestellt. Es versteht sich, dass die Darstellung nicht maßstabsgerecht ist. Ein kommerziell verfügbarer Detektor hat eine Größe von 30 mm x 30 mm und beispielsweise 4 000 000 quadratische Pixel mit einer Breite von 15 µm entsprechend der Breite des Spaltes 12.

Bei der gezeigten Anordnung wird eine Vielzahl von Ordnungen erzeugt, welche aufgrund der Querdispersion und der Vordispersion annähernd äquidistant nebeneinander liegen. Die mit 56 bezeichneten Ordnungen verlaufen auf dem Detektor 16 annähernd parallel zueinander, wie dies in Fig.2 angedeutet ist. Zwischen den Ordnungen 56 besteht ein nicht beleuchteter Abstand 58. Die Wellenlänge λ nimmt in der Richtung 66 nach unten entsprechend der Dispersion des Echellegitters 34 (Hauptdispersionsrichtung) zu. Die Ordnungen n werden entsprechend der Überlagerung der Vordispersion des Plangitters 20 und der Querdispersion des Prismas 38 nach rechts größer. Entsprechend liegt der kurzwellige Spektralbereich in hoher Ordnung rechts im Detektor

Der Abstand 58 zwischen den Ordnungen ergibt sich aus der Überlagerung der Vordispersion und der Querdispersion. Die Dispersion typischer Prismenmaterialien wie Quarz und Kalziumfluorid steigt in Richtung kürzerer Wellenlängen insbesondere im UV stark an. Entsprechend werden die Ordnungen ohne weitere Maßnahmen im kurzwelligen Wellenlängenbereich weit getrennt, während die Ordnungen im langwelligen Bereich eng beieinander liegen, wie dies etwa in der bereits erwähnten DE 10 2004 028 001 der Fall ist.

Die Winkeldispersion eines Beugungsgitters ist für kleine Beugungswinkel nahezu konstant.

Weil der freie Spektralbereich für die einzelnen Ordnungen eines Echelle-Gitters proportional zum Quadrat der Wellenlänge wächst, wächst auch der Abstand benachbarter Ordnungen bei Verwendung eines Gitters zur Ordnungstrennung in Richtung längerer Wellenlängen stark an.

Die Strichzahl des Gitters 20 wird nun so gewählt, dass sich die Einflüsse der Gitter-Vordispersion und der Prismen-Querdispersion auf die ungleichmäßige Ordnungstrennung im betrachteten Wellenlängenbereich, der im vorliegenden Ausführungsbeispiel zwischen 190 nm und 860 nm liegt, gerade kompensieren. Durch diese zweistufige Anordnung zur Ordnungstrennung wird ein annähernd konstanter Abstand zwischen den Ordnungen erreicht. Die aus Quer- und Vordispersion resultierende Gesamtdispersion wird gerade so groß gewählt, dass die unbeleuchteten Zwischenräume zwischen den Ordnungen immer breiter als ein Detektorpixel sind und somit zwischen den Ordnungen echte Intensitätsminima erreicht werden. Sie wird aber auch nicht wesentlich größer gewählt, um alle Ordnungen auf den beschriebenen, kommerziell verfügbaren Detektor abbilden zu können.

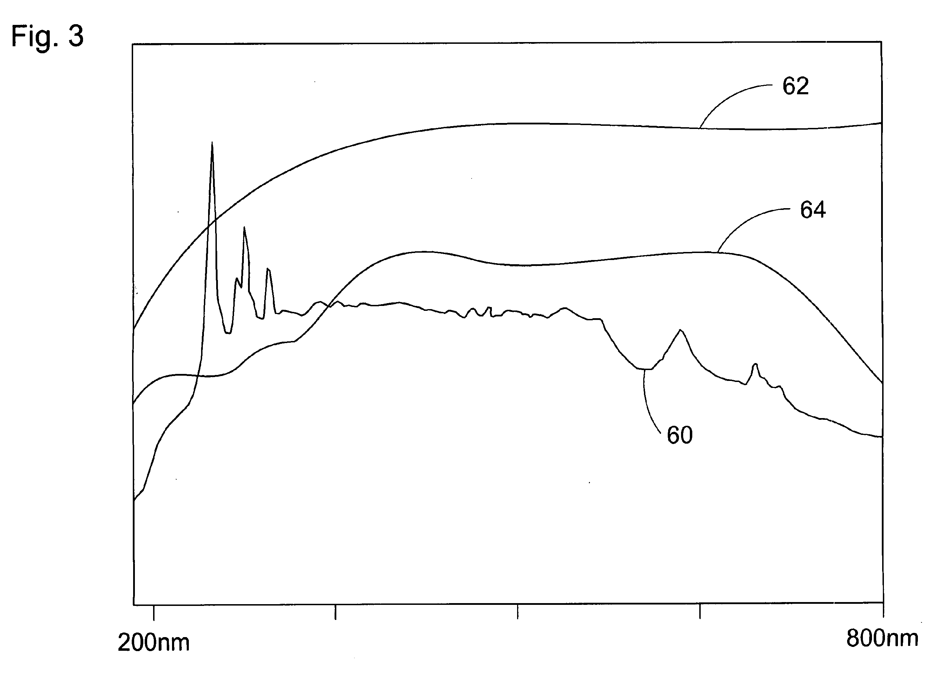

Figur 3 zeigt den spektralen Intensitätsverlauf 60 einer Xenon-Hochdruck-KurzbogenLampe. Man erkennt, dass die Intensität im analytisch sehr wichtigen Bereich um 200 nm erheblich geringer ist, als im Bereich um etwa 500 nm. Auch die Reflektivität 62 von Spiegeln und die Empfindlichkeit 64 des Detektors 16 nehmen im kurzwelligen Bereich im Normalfall ab.

Die Detektorelemente 54 des Detektors 16 werden alle mit der gleichen Frequenz ausgelesen. Das bedeutet, dass alle Detektorelemente mit der gleichen Belichtungszeit beleuchtet werden. Um zu vermeiden, dass stark beleuchtete Detektorelemente, beispielsweise im Wellenlängenbereich um 500 nm gesättigt werden, bevor ein ausreichendes Signal in den schwach beleuchteten Bereichen erzeugt wurde, wird ein Graufilter 68 mit ortsabhängiger Schwächung in der Bildebene 24 angeordnet.

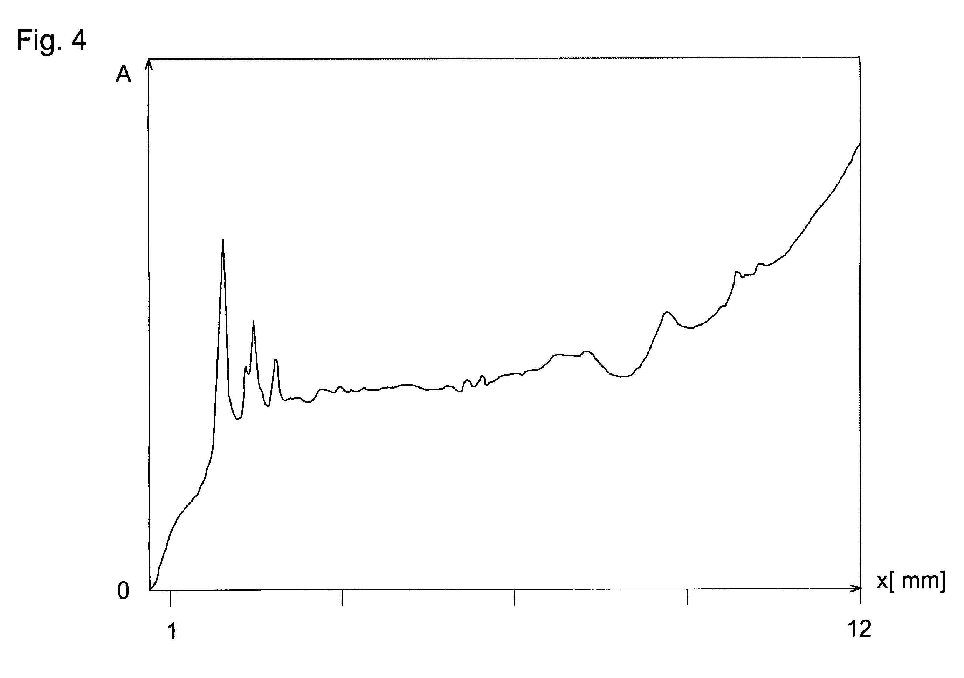

Figur 4 ist eine schematische Darstellung der ortsaufgelösten Graufilterabsorption in der Bildebene 24. Im linken Bereich ist der Filter vollständig transparent. Hier wird der kurzwellige Bereich abgebildet. Im rechten Bereich mit dem langwelligen Spektralbereich absorbiert der Graufilter stärker. Man erkennt, dass durch die ortsvariable Beschichtung eines dünnen Quarzglasfensters mit absorbierendem Material eine sehr genaue Beeinflussung des auf den Detektor auftreffenden Spektrums erreicht werden kann.

Der ideale Transmissionsverlauf des Graufilters wird experimentell bestimmt, indem die Spektrometer-Anordnung bei Abwesenheit des Filters mit der kontinuierlichen Strahlungsquelle beleuchtet wird. Dann erhält man auf dem Detektor entlang der Ordnungsmitten einen Intensitätsverlauf, welcher aus den Reflexions- und Transmissionsverlusten der optischen Komponenten sowie der Quantenempfindlichkeit des Detektors und dem spektralen Verlauf der Strahlungsquelle resultiert. Aus der so gewonnenen dichten Folge von Intensitätswerten kann der wellenlängenabhängige Transmissionsverlauf des Graufilters bestimmt werden. Dazu wird jeder Wert durch den kleinsten Intensitätswert innerhalb des Spektrums geteilt und der Kehrwert ermittelt. Wird am Ort der zusätzlichen Bildebene der vordispergierenden abbildenden Optik ein Graufilter mit diesem Transmissionsverlauf eingesetzt, entsteht für diese Konfiguration ein gleichförmiges Intensitätsspektrum am Detektor.

Es versteht sich, dass ein solcher Transmissionsverlauf auch errechnet oder auf andere Weise erhalten werden kann. Das vorgeschlagene Verfahren ist jedoch besonders einfach und genau.

Zusätzlich zu einem ortsaufgelösten Graufilter wird ein Ordnungsfilter eingesetzt, welcher höhere Ordnungen des vordispergierten Spektrums in der Bildebene 24 ausblendet.

Die vordispergierende Abbildungsoptik kann so dimensioniert werden, daß Abbildungsfehler der abbildenden Optik, insbesondere deren Astigmatismus, gerade kompensiert werden, so daß in der Bildebene ein anastigmatisches scharfes Bild des Eintrittsspaltes entsteht.

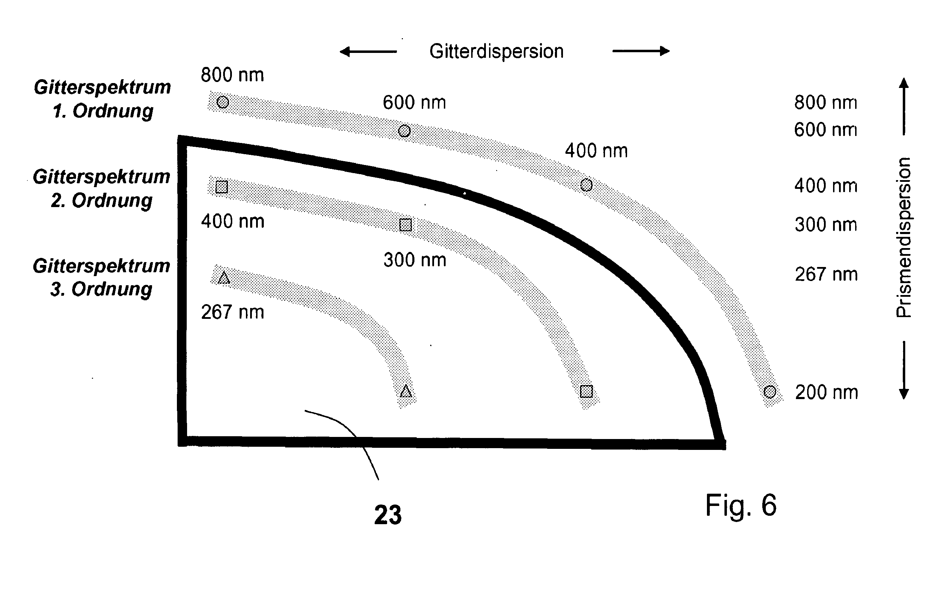

In einem weiteren, alternativen Ausführungsbeispiel wird hinter dem Gitter 20 zusätzlich ein Prisma 21 im Bereich der Bildebene 24 im Strahlengang angeordnet. Das Prisma 21 hat nur eine vergleichsweise schwache Dispersion in Hauptdispersionsrichtung des Echelle-Gitters. Das durch die Vordispersion am Gitter 20 erzeugte Gitterspektrum kann sich über mehrere Ordnungen erstrecken. Durch die Dispersion des Prismas 21 werden diese Ordnungen quer zur Vordispersion auseinandergezogen. Die nicht erwünschten höheren Ordnungen werden mit einer einfachen Blende 23 abgeschattet. Dadurch können die Wellenlängen jeder Position auf dem Detektor eindeutig zugeordnet werden. Das Prisma 21 in Kombination mit einer Blende macht einen Ordnungsfilter überflüssig. Das in der Bildebene 24 erzeugte Bild ist schematisch in Figur 6 dargestellt.

## Patentansprüche

1. Echelle-Spektrometeranordnung (10) mit interner Ordnungstrennung enthaltend
(a) ein Echelle-Gitter (34) zur spektralen Zerlegung von Strahlung in einer Hauptdispersionsrichtung (66),
(b) ein Prisma (38) als dispergierendes Element zur Ordnungstrennung mittels spektraler Zerlegung der Strahlung in einer Querdispersionsrichtung, welche einen Winkel mit der Hauptdispersionsrichtung des Echelle-Gitters (34) bildet, so dass ein zweidimensionales Spektrum mit einer Mehrzahl von getrennten Ordnungen (56) erzeugbar ist,
(c) eine abbildende Optik (18, 22, 28, 46) zur Abbildung der durch einen Eintrittsspalt (12) in die Spektrometer-Anordnung (10) eintretenden Strahlung in eine Bildebene, und
(d) einen Flächendetektor (16) mit einer zweidimensionalen Anordnung einer Vielzahl von Detektorelementen (54) in der Bildebene, und
(e) Vordispersionsmittel (20) zur Vordispersion der Strahlung in Richtung der Querdispersion des dispergierenden Elementes (38),
**dadurch gekennzeichnet, dass**
(f) die Vordispersionsmittel (20) ein vordispergierendes Gitter umfassen, welches entlang des optischen Weges hinter dem Eintrittsspalt (12) innerhalb der Spektrometer-Anordnung angeordnet ist und dessen Gitterstrichzahl derart an die Dispersion des Prismas angepasst ist, dass die auf den Detektor (16) abgebildeten Ordnungen (56) im wesentlichen äquidistant auftreten;
(g) die abbildende Optik derart ausgebildet ist, dass die vordispergierte Strahlung in eine zusätzliche Bildebene (24) abbildbar ist, welche entlang des optischen Weges zwischen vordispergierendem Element (20) und Echellegitter (34) angeordnet ist, und
(h) optische Mittel (20, 68) vorhanden sind, entwender in Form eines Ordnungsfilters am Ort des vordispergierten Spektrums in der zusätzlichen Bildesene (24) oder in Form von Vordispersionsmitteln, die ein zusätzliches Prisma, dessen Dachkante derart angeordnet ist, dass die Prismendispersion parallel zur Hauptdispersionsrichtung des Echelle-Gitters verläuft und weiterhin eine Blende zur Unterdrückung höherer Ordnungen des vordispergierenden Gitters enthalten.

2. Spektrometeranordnung nach Anspruch 1, **dadurch gekennzeichnet, dass** Mittel (68) zur ortsabhängigen Intensitätsschwächung der vordispergierten Strahlung in der zusätzlichen Bildebene (24) vorgesehen sind.

3. Spektrometeranordnung nach Anspruch 2, **dadurch gekennzeichnet, dass** die Mittel zur ortsabhängigen Intensitätsschwächung der vordispergergierten Strahlung von einem in der zusätzlichen Bildebene angeordneten Graufilter (68) mit ortsabhängiger Transmission gebildet sind.

4. Spektrometeranordnung nach Anspruch 2 oder 3, **dadurch gekennzeichnet, dass** die Intensitätsschwächung an den spektralen Verlauf der Transmission und Reflexion der abbildenden Optik (18, 22, 28, 46), des Echellegitters (34), der dispergierenden Elemente (38, 20), die Spektralverteilung der Intensität eines Strahlers (14) und/oder die Spektralverteilung der Quanteneffizienz des Detektors (16) derart angepasst ist, dass das von einem Strahler (14) auf dem Detektor (16) erzeugte Intensitätsspektrum im wesentlichen gleichförmig ist.

5. Spektrometeranordnung nach einem der vorgehenden Ansprüche, **dadurch gekennzeichnet, dass** eine Strahlungsquelle (14) mit kontinuierlichem Spektrum zwischen 190 nm und 860 nm, insbesondere eine Xe-Hochdruck-Kurzbogenlampe vorgesehen ist.

6. Spektrometeranordnung nach einem der vorgehenden Ansprüche, **dadurch gekennzeichnet, dass** die abbildende Optik derart ausgebildet ist, dass in der zusätzlichen Bildebene ein astigmatisches Bild erzeugbar ist, welches von weiteren optischen Komponenten der abbildenden Optik gerade kompensiert wird, so daß in der Bildebene am Detektor ein anastigmatisches, scharfes Bild entsteht.

7. Verwendung einer Spektrometeranordnung (10) nach einem der vorgehenden Ansprüche für Atomabsorptionsspektroskopie oder optische Emissionsspektroskopie.

8. Verfahren zur Erzeugung eines zweidimensionalen Echelle-Spektrums auf einem Flächendetektor mit einem Spektrometer nach einem der vorgehenden Ansprüche, **gekennzeichnet durch** die Schritte:
(a) Vordispergieren der Strahlung einer Strahlungsquelle (14) in einer Vordispersionsrichtung mit einem vordispergierenden Gitter;
(b) Erzeugen eines Bildes (24) der vordispergierten Strahlung;
(c) Ausblenden höherer Ordnungen der vordispergierten Strahlung mit einem Ordnungsfilter oder einem Prisma, welches quer zur vordispergierten Strahlung dispergiert und eine Blende zum Ausblenden der höheren Ordnungen;
(d) Erzeugen eines zweidimensionalen Echelle-Spektrums auf einem Flächendetektor (16), wobei die Querdispersionsrichtung des Echelle-Spektrums in Richtung der Vordispersionsrichtung liegt.

## Claims

1. Echelle spectrometer assembly (10) with internal separation of the orders, comprising
(a) an Echelle grating (34) for the spectral separation of radiation in a main dispersion direction (66),
(b) a prism (38) as dispersing element (38) for the separation of the orders by means of the spectral separation of the radiation in a lateral dispersion direction forming an angle with the main dispersion direction of the Echelle grating (34) such that a two-dimensional spectrum with a plurality of separated orders (56) is generated,
(c) an imaging optical assembly (18, 22, 28, 46) for imaging the radiation entering into the spectrometer assembly (10) through an entrance slit (12) into an image plane, and
(d) a detector (16) having a two-dimensional arrangement of a plurality of detector elements (54) in the image plane, and
(e) predispersion means (20) for predispersion of radiation in the direction of the lateral dispersion of the dispersing element (38),
**characterized in that**
(f) the predispersion means (20) comprise a predispersing grating, which is arranged along the optical path behind the entrance slit (12) inside the spectrometer assembly and which has a grating line number which is adapted to the dispersion of the prism in such a way that the orders imaged onto the detector (16) appear essentially with even distances;
(g) the imaging optical assembly is designed in such a way that the predispersed radiation is imaged into an additional image plane (24), the image plane being arranged along the optical path between the predispersing element (20) and the Echelle grating (34), and
(h) optical means (20, 68) are provided either in the form of an order filter positioned in the additional image plane (24) or in the form of predispersing means which comprise an additional prism having a roof edge which is positioned in such a way that the prism dispersion runs parallel to the main dispersion direction of the Echelle grating and furthermore, the predispersing means comprise a baffle for suppressing higher orders of the predispersing grating.

2. Spectrometer assembly according to claim 1, **characterized in that** means (68) are provided for reducing the intensity of the predispersed radiation in the additional image plane (24) depending on the spatial position.

3. Spectrometer assembly according to claim 2, **characterized in that** the means for reducing the intensity of the predispersed radiation depending on the spatial position are formed by a grey filter (68) having a spatially variable transmission in the additional image plane.

4. Spectrometer assembly according to claim 2 or 3, **characterized in that** the reduction of the intensity is adapted to the spectral distribution of the transmission and the reflectivity of the imaging optical assembly (18, 22, 28, 46), the Echelle grating (34), the dispersing elements (38, 20), the spectral distribution of the intensity of a radiation source (14) and/or the spectral distribution of the quantum effectivity of the detector (16) in such a way that the intensity spectrum generated by a radiation source (14) on the detector 816) is essentially even.

5. Spectrometer assembly according to any of the preceding claims, **characterized in that** a radiation source (14) with a continuous spectrum between 190 nm and 860 nm is provided, especially a Xe-high pressure short arc lamp.

6. Spectrometer assembly according to any of the preceding claims, **characterized in that** the imaging optical assembly is designed in such a way that an astigmatic image can be generated in the additional image plane which is compensated by the further optical components of the imaging optical assembly just in such a way that an astigmatic, precise image is generated in the image plane at the detector.

7. Use of a spectrometer assembly (10) according to any of the preceding claims for atomic absorption spectroscopy or optical emission spectroscopy.

8. Method for generating a two-dimensional Echelle spectrum on a detector, **characterized by** the steps of:
(a) predispersing the radiation emitted by a radiation source (14) in a predispersion direction with a predispersing grating;
(b) generating an image (24) of the predispersed radiation;
(c) removing higher orders of the predispersed radiation with an order filter or a prism dispersing in a lateral direction relative to the predispersed radiation and a baffle for removing higher orders;
(d) generating a two-dimensional Echelle spectrum on a detector (16) wherein the lateral dispersion direction of the Echelle spectrum is directed in the direction of the predispersion.

## Revendications

1. Disposition de spectromètre échelle (10) à séparation interne des ordres, comprenant
(a) un réseau-échelle (34) destiné à la décomposition spectrale d'un rayonnement dans un sens de dispersion principal (66),
(b) un prisme (38) faisant fonction d'élément de dispersion et destiné à séparer les ordres au moyen de la décomposition spectrale du rayonnement dans un sens de dispersion transversal qui forme un angle avec le sens de dispersion principal du réseau-échelle (34) de sorte qu'un spectre bidimensionnel de plusieurs ordres séparés (56) est susceptible d'être généré,
(c) un système optique de reproduction (18, 22, 28, 46) destiné à reproduire dans un plan d'image le rayonnement entrant dans la disposition de spectromètre (10) par une fente d'entrée (12), et
(d) un détecteur de surface (16) présentant une disposition bidimensionnelle de plusieurs éléments détecteurs (54) dans le plan d'image, et,
(e) des moyens de prédispersion (20) destinés à prédisperser le rayonnement dans le sens de dispersion transversal de l'élément de dispersion (38),
**caractérisée en ce que**
(f) les moyens de prédispersion (20) comprennent un réseau de prédispersion disposé le long du chemin optique derrière la fente d'entrée (12) à l'intérieur de la disposition de spectromètre et dont le nombre de traits de réseau est adapté à la dispersion du prisme de sorte que les ordres (56) reproduits sur le détecteur (16) apparaissent sensiblement à équidistance les uns des autres ;
(g) le système optique de reproduction est configuré de sorte que le rayonnement prédispersé est susceptible d'être reproduit dans un plan d'image supplémentaire (24) qui est disposé le long du chemin optique entre l'élément de prédispersion (20) et le réseau-échelle (34), et
(h) des moyens optiques (20, 68) sont présents, moyens se présentant soit sous forme de filtre d'ordres disposé à l'endroit du spectre prédispersé dans le plan d'image supplémentaire (24) ou sous forme de moyens de prédispersion comprenant un prisme supplémentaire dont l'arête de sommet est disposée de sorte que la dispersion prismatique est parallèle au sens de dispersion principal du réseau-échelle, et comprenant en outre un diaphragme destiné à bloquer les ordres supérieurs du réseau de prédispersion.

2. Disposition de spectromètre selon la revendication 1, **caractérisée en ce qu'**il est prévu des moyens (68) destinés à affaiblir l'intensité locale du rayonnement prédispersé dans le plan d'image supplémentaire (24).

3. Disposition de spectromètre selon la revendication 2, **caractérisée en ce que** les moyens destinés à affaiblir l'intensité locale du rayonnement prédispersé sont formés par un filtre gris (68) à transmission locale disposé dans le plan d'image supplémentaire.

4. Disposition de spectromètre selon la revendication 2 ou 3, **caractérisée en ce que** l'affaiblissement de l'intensité est adapté au tracé spectral de la transmission et de la réflexion du système optique de reproduction (18, 22, 28, 46), du réseau-échelle (34), des éléments de dispersion (38, 20), de la répartition spectrale de l'intensité d'un émetteur (14) et/ou la répartition spectrale de l'efficacité quantique du détecteur (16) de sorte que le spectre d'intensité généré par un émetteur (14) sur le détecteur (16) est sensiblement uniforme.

5. Disposition de spectromètre selon l'une quelconque des revendications précédentes, **caractérisée en ce qu'**il est prévu une source de rayonnement (14) à spectre continu entre 190 nm et 860 nm, notamment une lampe à arc court haute pression au Xe.

6. Disposition de spectromètre selon l'une quelconque des revendications précédentes, **caractérisée en ce que** le système optique de reproduction est configuré de sorte qu'une image astigmate est susceptible d'être générée dans le plan d'image supplémentaire, image qui est compensée par d'autres composants optiques du système optique de reproduction de sorte qu'apparaît une image nette non astigmate dans le plan d'image du détecteur.

7. Utilisation d'une disposition de spectromètre (10) selon l'une quelconque des revendications précédentes pour la spectroscopie d'absorption atomique ou la spectroscopie d'émission optique.

8. Procédé pour la génération d'un spectre échelle bidimensionnel sur un détecteur de surface à l'aide d'un spectromètre selon l'une quelconque des revendications précédentes, **caractérisé par** les étapes de :
(a) prédispersion du rayonnement d'une source de rayonnement (14) dans un sens de prédispersion à l'aide d'un réseau de prédispersion ;
(b) génération d'une image (24) du rayonnement prédispersé ;
(c) masquage des ordres supérieurs du rayonnement prédispersé à l'aide d'un filtre d'ordres ou d'un prisme à dispersion diagonale par rapport au rayonnement prédispersé et d'un diaphragme destiné à masquer les ordres supérieurs ;
(d) génération d'un spectre échelle bidimensionnel sur un détecteur de surface (16), le sens de dispersion transversal du spectre échelle se trouvant dans le sens du sens de prédispersion.
